# FASCICULE DE BREVET EUROPEEN

(11) **EP 1 371 446 B1**
(45) Date de publication et mention de la délivrance du brevet: **12.03.2008**
(21) Numéro de dépôt: 03291249.5
(22) Date de dépôt: 26.05.2003
(51) Int. Cl.: B23K 26/12, B23K 35/38, B23K 26/32

(54) **Utilisation de mélanges gazeux hélium/azote en soudage laser de flancs raboutés**
Gebrauch von Helium/Stickstoff-Gasgemischen beim Schweissen von gestumpften Flanken
Use helium/nitrogen gas mixtures in laser welding of abutted flanks

(30) Priorité: 14.06.2002 FR 0207343
(43) Date de publication de la demande: 17.12.2003
(73) Titulaire: L'AIR LIQUIDE, Société Anonyme pour l'Etude et l'Exploitation des Procédés Georges Claude, 75007 Paris (FR)
(72) Inventeur: Briand, Francis, 75009 Paris (FR); Chouf, Karim, 93380 Epinay S/seine (FR); Lefebvre, Philippe, 95310 Saitouen l'Aumone (FR); Verna, Eric, 95650 Boissy l'Aillerie (FR)
(74) Mandataire: Pittis, Olivier

(56) Documents cités:
- WO-A-02/43918
- DE-A- 3 726 072
- US-B1- 6 281 472

## Description

La présente invention concerne un procédé de soudage laser de flancs raboutés selon le préambule de la revendication 1 destinés à constituer des parties de véhicules automobiles, en particulier de flancs raboutés devant être emboutis après soudage. Le document WO02/43918 A décrit un tel procédé

Le soudage par faisceau laser est un procédé d'assemblage très performant car il permet d'obtenir, à des vitesses élevées, des profondeurs de pénétration très importantes si on les compare à d'autres procédés plus traditionnels, tel le soudage plasma, le soudage MIG (Metal Inert Gas) ou le soudage TIG (Tungsten Inert Gas).

Ceci s'explique par les fortes densités de puissances mises en jeu lors de la focalisation, par un ou plusieurs miroirs ou lentilles, du faisceau laser au niveau du plan de jonction des pièces à souder, par exemple des densités de puissance pouvant dépasser 10⁶ W/cm²

Ces fortes densités de puissance provoquent une forte vaporisation à la surface des pièces qui, en se détendant vers l'extérieur, induit un creusement progressif du bain de soudage et conduit à la formation d'un capillaire de vapeur étroit et profond, appelé *"keyhole"* en anglais (= "trou de serrure") dans l'épaisseur des tôles, c'est-à-dire au niveau du plan de joint.

Ce capillaire permet un dépôt direct de l'énergie du faisceau laser en profondeur dans la tôle et ce, par opposition avec les procédés de soudage plus conventionnels où le dépôt d'énergie est localisé à la surface, comme en soudage TIG, voire MIG.

A ce titre, on peut citer les documents suivants : DE-A-2713904, DE-A-4034745, JP-A-01048692, JP-A-56122690, WO 97/34730, JP-A-01005692, DE-A-4123716, JP-A-02030389, US-A-4,871,897, JP-A-230389, JP-A-62104693, JP-A-15692, JP-A-15693, JP-A-15694, JP-A-220681, JP-A-220682, JP-A-220683, WO-A-88/01553, WO-A-98/14302 DE-A-3619513 et DE-A-3934920.

Ce capillaire est constitué d'un mélange de vapeurs métalliques et de plasma de vapeurs métalliques dont la particularité est d'absorber le faisceau laser et de piéger l'énergie au sein du capillaire même.

Une des problématiques du soudage laser est la formation d'un plasma de gaz de couverture.

En effet, le plasma de vapeurs métalliques, en ensemençant en électrons libres le gaz de couverture ou gaz de protection, peut déclencher l'apparition d'un plasma de gaz de couverture qui est préjudiciable à l'opération de soudage.

Le faisceau laser incident peut alors être fortement perturbé par le plasma de gaz de couverture.

L'interaction du plasma de gaz de couverture avec le faisceau laser peut prendre diverses formes mais, le plus souvent, cela se traduit par un effet d'absorption et/ou de diffraction du faisceau laser incident qui peut conduire à une réduction importante de la densité de puissance laser efficace à la surface de la cible, entraînant une diminution de la profondeur de pénétration, voire une perte de couplage entre le faisceau et la matière, et donc à une interruption momentanée du processus de soudage.

Le seuil de densité de puissance à partir duquel le plasma apparaît dépend du potentiel d'ionisation du gaz de couverture utilisé et est inversement proportionnel au carré de la longueur d'onde du faisceau laser.

Ainsi, il est très difficile de souder sous argon pur avec un laser de type CO₂, tandis que cette opération peut être réalisée avec beaucoup moins de problème avec un laser de type YAG.

En général, en soudage laser CO₂, on utilise comme gaz de couverture de l'hélium qui est un gaz à haut potentiel d'ionisation et qui permet de se prémunir de l'apparition du plasma de gaz de couverture et ce jusqu'à une puissance laser d'au moins 45kW.

L'hélium a cependant l'inconvénient d'être un gaz onéreux et de nombreux utilisateurs de laser préféraient utiliser d'autres gaz ou mélanges gazeux moins onéreux que l'hélium mais qui permettraient néanmoins de limiter l'apparition du plasma de gaz de couverture et donc d'obtenir des résultats de soudage similaires à ceux obtenus avec l'hélium mais à un coût moindre.

Ainsi, il existe au plan commercial des mélanges gazeux contenant de l'argon et de l'hélium, par exemple le mélange gazeux contenant 30 % en volume d'hélium et le reste étant de l'argon, commercialisé sous l'appellation LASAL^{™} 2045 par la société L'AIR LIQUIDE^{™}, lesquels permettent d'obtenir sensiblement les mêmes résultats que l'hélium, pour des puissances laser CO₂ inférieures à 5kW et pourvu que les densités de puissance engendrées ne soient pas trop importantes, c'est-à-dire inférieures à environ à 2000 kW/cm².

Cependant, le problème qui se pose avec ce type de mélange Ar/He est que pour des densités de puissance laser plus importantes, il n'est plus adapté car le seuil de création du plasma de gaz de protection est alors dépassé.

Par ailleurs, un autre problème connu concerne l'aspect économique du soudage des flancs raboutés destinés au domaine automobile.

En effet, les exigences des constructeurs automobiles pour le soudage de flancs raboutés sont tellement strictes que les investissements nécessaires à la réalisation de ces soudures sont très importants.

Les flancs raboutés sont des pièces constitutives des véhicules automobiles qui doivent être assemblées par soudage débouchant, c'est-à-dire que la soudure doit traverser totalement l'épaisseur de la pièce soudée.

Compte tenu de leur faibles épaisseurs habituelles, typiquement moins de 3 mm, des vitesses de soudage importantes fixées par le fabricant d'automobile (>7m/min), il est connu d'assembler les flancs raboutés par soudage laser.

Le soudage laser permettant d'obtenir des cordons de soudure étroits et profonds, les zones affectées thermiquement par ce procédé de soudage restent localisées près de la zone d'interaction avec le laser, limitant les dimensions de la zone où le revêtement superficiel de zinc c'est évaporé.

Le soudage laser des flancs raboutés nécessite l'utilisation d'un gaz de protection qui est généralement de l'hélium.

Le but de la présente invention est alors de proposer un procédé de soudage laser utilisant un mélange gazeux de soudage adapté au soudage des flancs raboutés de faible épaisseur, comprenant éventuellement un revêtement de zinc, et devant être subséquemment mis en forme, notamment emboutis, lequel gaz conduit à former un plasma métallique moins chaud lors du soudage de manière à obtenir d'un joint de soudure résistant, c'est-à-dire qui puisse résister à une ou des étapes subséquentes d'emboutissage sans rupture, et qui soit beaucoup moins onéreux qu'un procédé de soudage utilisant de l'hélium pur.

La solution de l'invention est alors un procédé de soudage de flancs raboutés formés d'un matériau contenant majoritairement de l'acier et une proportion supérieure à 0,015% en poids d'aluminium, mettant en oeuvre au moins un faisceau laser, dans lequel on réalise au moins un joint de soudure de type débouchant en utilisant un mélange gazeux constitué de 30% à 80% en volume d'azote et d'hélium pour le reste (jusqu'à 100%) pour assister ledit faisceau laser.

Dans le cadre de l'invention par "joint de soudure de type débouchant", on entend que le joint concerne toute l'épaisseur des tôles à assembler et qu'une partie du faisceau laser passe au travers des pièces ou, dit autrement, débouche à l'envers du cordon de soudure.

La teneur minimale de 0.015% en aluminium dans le métal de base permet de limiter les problèmes de rupture se posant subséquemment au soudage, en particulier lors des étapes de mise en forme des pièces ainsi soudées, lorsque celles-ci sont en acier à haute limite d'élasticité (HLE), par exemple lors de la déformation des pièces soudées par emboutissage.

En effet, l'azote contenu dans le métal dans sa forme "libre" est l'un des éléments chimiques responsable de cet effet. Il contribue au "vieillissement" des aciers en diminuant leurs capacités de déformation, ce qui est un grave problème pour les tôles qui doivent être embouties.

Afin de résoudre ce problème, les teneurs en aluminium composant de l'acier de base sont augmentées de manière à fixer l'élément azote en favorisant la formation de nitrure d'aluminium. L'azote ainsi fixer par l'aluminium n'est plus aussi nuisible lors des étapes de déformation citées ci-dessus.

De ce fait, au cours du processus de soudage, l'utilisation de mélanges gazeux de protection contenant de l'azote mélangé à l'hélium ne conduit pas à un effet nuisible sur la qualité de la soudure tant que les teneurs en aluminium de l'acier soudé sont suffisantes pour fixer les quantités d'azote qui s'introduisent dans le matériau.

Selon le cas, le procédé de l'invention peut comprendre l'une ou plusieurs des caractéristiques techniques suivantes :
- le matériau de base des tôles soudées est un acier classique d'emboutissage définit suivant la norme EN10130, une acier d'emboutissage à haute limite élastique (HLE) ayant une limite élastique supérieure à 300Mpa et définit suivant la norme EN10149, ou un acier mono allié suivant la norme NFA36232.
- le gaz d'assistance contient de 40 à 70% en volume d'azote, de préférence de 45 à 60% d'azote.
- le laser est de type CO₂ et a une puissance de 4 à 10 kW, de préférence de 6 à 8 kW.
- le laser est de type YAG et a une puissance de 1 à 6 kW.
- les flancs raboutés à souder ont une épaisseur comprise entre 0.4 et 3 mm.
- les flancs raboutés ont un revêtement superficiel métallique qui améliore leur résistance à la corrosion, en particulier un revêtement surfacique de zinc obtenu par galvanisation ou électrozinguage.
- les flancs raboutés à souder sont disposés bout à bout, puis soudés.
- après soudage, les flancs soudés subissent au moins une étape de mise en forme.
- après soudage, les flancs soudés subissent au moins une étape d'emboutissage. Une opération d'emboutissage consiste à conférer à une tôle plane ou à un flanc rabouté plan, une forme tridimensionnelle obtenue en déformant la tôle ou le flanc rabouté au moyen d'une presse dont les matrices reproduisent la forme à obtenir.
- les flancs raboutés sont constitués de matériau de même nuance et d'épaisseur différente ou de nuances différentes et d'épaisseurs identiques ou différentes.
- le soudage se fait par tâche focale mono ou multi-spots (impact).
- la tâche focale est circulaire ou oblongue.
- le débit de gaz est compris entre 5 l/min et 100 l/min.
- la pression du gaz est comprise entre 1 et 5 bars.
- la buse distribuant le gaz est une buse latérale ou axiale ayant un diamètre allant de 3 à 30 mm.

Selon un autre aspect l'invention porte aussi sur un procédé de fabrication de véhicule automobile, dans lequel on met en oeuvre un procédé de soudage laser de flancs raboutés selon l'invention.

L'invention va être mieux comprise grâce aux exemples illustratifs ci-après et aux figures annexées.

### Exemple 1 : effets d'une augmentation de la proportion d'azote dans l'hélium

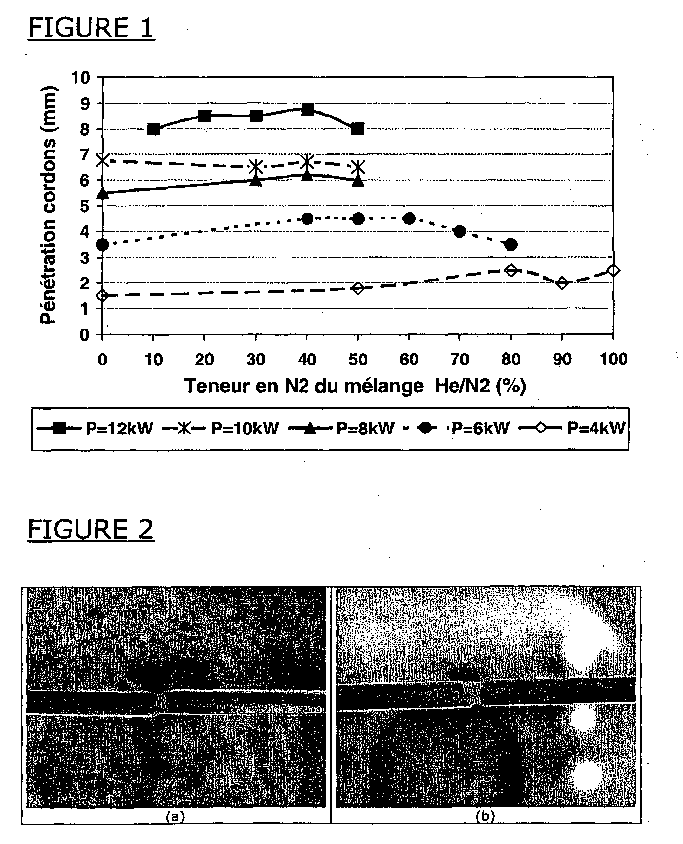

La figure 1 annexée représente les effets d'une augmentation progressive de la proportion d'azote ajoutée à de l'hélium sur la pénétration du cordon de soudure en soudage laser utilisant les mélanges azote/hélium ainsi obtenus.

Plus précisément, pour évaluer ces effets, on a mesuré la pénétration de lignes de fusion réalisées avec un laser CO₂ focalisé à la surface d'une cible métallique d'acier carbone - manganèse par un miroir parabolique possédant une distance focale de 200 mm.

Le gaz de protection est constitué d'un mélange He/N₂. La teneur en azote du mélange est reportée en pourcentage (% en volume) sur l'axe des abscisses, le reste du mélange étant de l'hélium. Le gaz est distribué dans la zone d'interaction par une buse latérale de forme cylindrique de diamètre égal à 12 mm et à un débit de 24 l/min.

La vitesse de soudage est de 3 m/min.

On peut voir sur la figure 1 que la pénétration des cordons de soudure est au minimum conservée pour des puissances laser comprises entre 4 et 12 kW. Dans certains cas, on observe même une augmentation de la pénétration des cordon de l'ordre de 5 à 10%. Ce type de résultats est aussi reproductible si l'on fait varier l'un des paramètres expérimentaux précédents.

### Exemple 2 : soudage de flancs raboutés galvanisés

Des tôles galvanisées d'épaisseur 1.76 mm et présentant une couche superficielle de 8 µm de zinc ont été soudées par faisceau laser en utilisant, d'une part, de l'hélium pur et, d'autre part, un mélange hélium/azote selon le procédé de l'invention.

La puissance laser CO₂ mise en oeuvre est égale à 7 kW, la distance focale de 200 mm et la vitesse de soudage de 8 m/min.

Le gaz de protection est d'hélium pour la soudure A et d'un mélange He/N₂ formé de 60% de hélium et de 40% d'azote pour la soudure B (selon l'invention).

Le gaz est distribué dans la zone d'interaction par une buse latérale de forme cylindrique de diamètre égal à 12 mm et à un débit de 20 l/min.

En comparant des macrographies (figure 2) obtenues sur les flancs raboutées galvanisés soudés avec de l'hélium pur (figure 2a) ou, à titre comparatif, le mélange He/N₂ contenant 60% de He et 40% de N₂ (figure 2b), on peut constater qu'elles étaient identiques.

Autrement dit, la soudure obtenue avec un mélange gazeux He/N₂ selon l'invention est identique à celle obtenue avec de l'hélium pur et ce, malgré la présence d'une forte teneur en azote dans le gaz et malgré la présence de zinc en superficie des pièces.

Par ailleurs, une comparaison des duretés des cordons de soudure A et B ainsi obtenus a été réalisée et les résultats sont donnés dans le tableau 1 ci-après.

**Tableau 1**

| | Métal de base | Cordon de soudure |
|---|---|---|
| Soudure A (art antérieur) | 97 Hv100 ± 2 | 202 Hv100 ± 2 |
| Soudure B (60% He + 40% N₂) | 107 Hv100 ± 2 | 214 Hv100 ± 2 |

Ces mesures ont été réalisées avec un micro-duromètre de type BUEHELER MICROMET II Digital MicroHardness Tester. L'empreinte de la mesure a été faite avec un poids de 100 g qui exerçait une force pendant 15 secondes. Les valeurs indiquées sont des valeurs moyennes sur 3 mesures réalisées sur des tôles soudées en pénétration totale, dans différentes zones de la tôle (près de la surface, au milieu et près de l'envers). Hv100 est l'unité de mesure de la dureté Vickers ou Hardness Vickers ; le chiffre qui suit le Hv signifie que le poids utilisé pour la mesure est de 100 g.

On retrouve des valeurs similaires de duretés pour les cordons réalisés avec une de l'hélium pur ou avec un mélange He/N₂.

Ceci confirme que, de manière surprenante, la présence d'une forte proportion d'azote dans la soudure (soudure A) ne nuit absolument pas à la dureté de celle-ci.

De même, des tests d'emboutissabilité de type Erickseen réalisés sur les cordons de soudure précédents donnent des résultats similaires (cf. tableau 2 ci-après). En effet, les valeurs de la déformation du cordon de soudure H_{soud} sont au moins égales à 70% de celle du métal de base H_{MB}.

**Tableau 2**

| | Mesure 1 | Mesure 2 | Mesure 3 |
|---|---|---|---|
| Soudure A (100% He) | H_{Soud} = 75% H_{MB} | H_{soud} = 75% H_{MB} | H_{Soud} = 77% H_{MB} |
| Soudure B (60% He + 40% N₂) | H_{Soud} = 72% H_{MB} | H_{Soud} = 75% H_{MB} | H_{Soud} = 72% H_{MB} |
| Soudure C (80% He + 20% N₂) | H_{Soud} = 72% H_{MB} | H_{Soud} = 71% H_{MB} | H_{Soud} = 70% H_{MB} |

Dans le tableau 2, on a aussi donné les résultats obtenus dans le cas d'une soudure (soudure C) obtenue par soudage laser dans les mêmes conditions que les soudures A et B mais en mettant en oeuvre un mélange gazeux selon l'invention contenant une proportion d'azote plus faible (soit 20% azote) que dans le cas de la soudure B.

Le procédé de l'invention peut servir à souder des éléments de carrosserie, telles des ailes, des pièces d'ouvrants, telles des portières ou des capots, ou des pièces hydroformées, telles des structures tubulaires, ou tout autre élément similaire.

## Revendications

1. Procédé de soudage de flancs raboutés formés d'un matériau contenant majoritairement de l'acier, mettant en oeuvre au moins un faisceau laser, dans lequel on réalise au moins un joint de soudure de type débouchant en utilisant un mélange gazeux comprenant de l'azote et de l'hélium pour assister ledit faisceau laser **caractérisé en ce que** le matériau contient une proportion supérieure à 0,015 % en poids d'aluminium et que le mélange gazeux est constitué de 30% à 80% en volume d'azote et d'hélium pour le reste (jusqu'à 100%).

2. Procédé selon la revendication 1, **caractérisé en ce que** le gaz d'assistance contient préférentiellement de 40 % à 70 % d'azote.

3. Procédé selon l'une des revendications 1 ou 2, **caractérisé en ce que** le laser est de type CO₂ et a une puissance de 4 à 10 kW, de préférence de 6 à 8 kW, ou le laser est de type YAG et a une puissance de 1 à 6 kW

4. Procédé selon l'une des revendications 1 ou 2, **caractérisé en ce que** le gaz d'assistance contient préférentiellement de 45 à 60% d'azote.

5. Procédé selon l'une des revendications 1 à 4, **caractérisé en ce que** les flancs raboutés à souder ont une épaisseur comprise entre 0.4 et 3 mm.

6. Procédé selon l'une des revendications 1 à 5, **caractérisé en ce que** les flancs raboutés sont en acier avec un revêtement métallique anti-corrosion.

7. Procédé selon l'une des revendications 1 à 5, **caractérisé en ce que** les flancs raboutés sont en acier avec un revêtement surfacique de zinc.

8. Procédé selon l'une des revendications 1 à 7, **caractérisé en ce qu'**après soudage, les flancs soudés subissent au moins une étape de mise en forme par emboutissage.

9. Procédé selon l'une des revendications 1 à 8, **caractérisé en ce que** le matériau est un acier à haute limite élastique dont la limite d'élasticité est d'au moins 300 Mpa.

10. Procédé de fabrication de véhicule automobile ou d'éléments de véhicule automobile, dans lequel on met en oeuvre un procédé de soudage laser de flancs raboutés selon l'une des revendications 1 à 9.

## Claims

1. Process for welding tailor-welded blanks of a material containing predominantly steel, employing at least one laser beam, in which at least one through-weld is produced using a gas mixture comprising nitrogen and helium for assisting said laser beam, **characterized in that** the material has an aluminium content of greater than 0.015% by weight and the gas mixture consists of 30% to 80% nitrogen by volume and helium the remainder (up to 100%).

2. Process according to Claim 1, **characterized in that** the assistance gas preferably contains 40% to 70% nitrogen.

3. Process according to either of Claims 1 and 2, **characterized in that** the laser is a CO₂ laser and has a power of 4 to 10 kW, preferably 6 to 8 kW, or the laser is a YAG laser and has a power of 1 to 6 kW.

4. Process according to either of Claims 1 and 2, **characterized in that** the assistance gas preferably contains 45 to 60% nitrogen.

5. Process according to one of Claims 1 to 4, **characterized in that** the tailor-welded blanks to be welded have a thickness of between 0.4 and 3 mm.

6. Process according to one of Claims 1 to 5, **characterized in that** the tailor-welded blanks are made of steel with an anti-corrosion metal coating.

7. Process according to one of Claims 1 to 5, **characterized in that** the tailor-welded blanks are made of steel with a zinc surface coating.

8. Process according to one of Claims 1 to 7, **characterized in that**, after welding, the welded blanks undergo at least one forming step by drawing.

9. Process according to one of Claims 1 to 8, **characterized in that** the material is a high-yield-strength steel, the yield strength of which is at least 300 MPa.

10. Process for producing a motor vehicle or motor vehicle components, in which a process for the laser welding of tailor-welded blanks according to one of Claims 1 to 9 is employed.

## Patentansprüche

1. Verfahren zum Schweißen von zusammengefügten Kanten, die aus einem hauptsächlich Stahl enthaltenden Werkstoff gebildet sind, das wenigstens ein Laserstrahlenbündel verwendet und in dem wenigstens eine Schweißnaht des Lochungstyps unter Verwendung eines Gasgemisches, das Stickstoff und Helium enthält, verwirklicht wird, um das Laserstrahlenbündel zu unterstützen,
**dadurch gekennzeichnet, dass** der Werkstoff Aluminium in einem Anteil von mehr als 0,015 Gew.-% enthält und dass das Gasgemisch aus 30 bis 80 Vol.-% Stickstoff und für den Rest (bis 100 %) aus Helium gebildet ist.

2. Verfahren nach Anspruch 1, **dadurch gekennzeichnet, dass** das Hilfsgas vorzugsweise 40 % bis 70 % Stickstoff enthält.

3. Verfahren nach einem der Ansprüche 1 oder 2, **dadurch gekennzeichnet, dass** der Laser vom Typ CO₂ ist und eine Leistung von 4 bis 10 kW, vorzugsweise von 6 bis 8 kW hat oder der Laser vom Typ YAG ist und eine Leistung von 1 bis 6 kW hat.

4. Verfahren nach einem der Ansprüche 1 oder 2, **dadurch gekennzeichnet, dass** das Hilfsgas vorzugsweise 45 bis 60 % Stickstoff enthält.

5. Verfahren nach einem der Ansprüche 1 bis 4, **dadurch gekennzeichnet, dass** die zu verschweißenden zusammengefügten Kanten eine Dicke im Bereich von 0,4 bis 3 mm haben.

6. Verfahren nach einem der Ansprüche 1 bis 5, **dadurch gekennzeichnet, dass** die zusammengefügten Kanten aus Stahl mit einer Antikorrosions-Metallbeschichtung bestehen.

7. Verfahren nach einem der Ansprüche 1 bis 5, **dadurch gekennzeichnet, dass** die zusammengefügten Kanten aus Stahl mit einer Zink-Oberflächenbeschichtung bestehen.

8. Verfahren nach einem der Ansprüche 1 bis 7, **dadurch gekennzeichnet, dass** nach dem Schweißen die verschweißten Kanten wenigstens einem Schritt des Pressformens unterworfen werden.

9. Verfahren nach einem der Ansprüche 1 bis 8, **dadurch gekennzeichnet, dass** das Material ein Stahl mit hoher Elastizitätsgrenze ist, wobei die Elastizitätsgrenze wenigstens 300 MPa beträgt.

10. Verfahren zum Herstellen eines Kraftfahrzeugs oder von Kraftfahrzeugelementen, bei dem ein Laserschweißverfahren für zusammengefügte Kanten nach einem der Ansprüche 1 bis 9 ausgeführt wird.
